# EUROPEAN PATENT APPLICATION

(11) **EP 4 181 245 A1**
(43) Date of publication of application: **17.05.2023**
(21) Application number: 21207901.6
(22) Date of filing: 12.11.2021
(51) Int. Cl.: H01M 8/0273, H01M 8/10

(54) **FRAME DEVICE FOR A FUEL STACK AND FUEL CELL DEVICE COMPRISING THE SAME**

(71) Applicant: AVL List GmbH, 8020 Graz (AT); AVL Fuel Cell Canada Inc., Burnaby, British Columbia V5A4N8 (CA)
(72) Inventor: Thomas, Owen, Vancouver, V5A4N8 (CA); Raibeck, Laura, Vancouver, V5A4N8 (CA); Cimenti, Max, Vancouver, V5A4N8 (CA); Hsieh, Yvonne, Vancouver, V5A4N8 (CA)
(74) Representative: Gamper, Bettina

(57) **Abstract**

The present invention relates to a frame device (10) for an electrochemical fuel cell stack having stacked cells and a corresponding fuel cell device (100) comprising said frame device (10). The frame device (10) being provided in each cell for mounting a membrane-electrode assembly (20) in the fuel cell stack; wherein the frame device (10) comprises: an open inner support section (11) overlapping with the membrane-electrode assembly (20) in a peripheral section for supporting the membrane-electrode assembly (20), an outer mounting section (12) extending outside the peripheral section for fixing the frame device (10) in the fuel cell device (100), and at least one diffusion section (13) comprising diffusor elements (14) for diffusion of a fluid in a pathway of the fuel cell stack, the diffusor elements (14) projecting from at least one of opposite sides in a thickness direction of the frame device (10).

## Description

The present application relates to a frame device for mounting a membrane-electrode assembly in a fuel cell stack and a fuel cell device having a stack arrangement of stacked cells, wherein each cell includes the frame device for mounting the membrane-electrode assembly in the stack arrangement.

### Technical field of the invention

The frame device according to the invention is suitable to be integrated in the stack design of a compact fuel cell system, in particular a compact fuel cell for transportation applications having a proton exchange membrane (PEM-FC), where a membrane-electrode assembly of each cell is to be mounted in a stack arrangement, or any other type of electrochemical device comprising a stack of cells including a membrane alternatingly stacked between bipolar plates and accommodating channels or other kinds of pathways for conducting fluids for electrochemical reaction in the cells.

### Background of the invention

For an economical manufacturing and assembling, the design of a fuel cell stack strives for stackable parts identically formed as possible for a repeatedly stacking of so-called unit cells building up the fuel cell stack. Also in terms of an economical manufacturing and assembling, the design strives for a small number of components. Further, in purpose of a compact design each component needs to integrate more than one of all required functionalities.

Several compact fuel cell stack designs integrate channels and manifolds for supply of hydrogen and air as well as discharge of exhaust gas and water or wet gas fluid within the stack. It is known to provide so-called transition regions to fluidly communicate from e.g. two opposite sides with gas diffusion layers in an active region of the cells. Such transition regions provide a fluid interface for distributing or collecting fluids to or from the cells, i.e. the membrane-electrode assemblies. The transition regions need to be designed in a way to evenly distribute flow, or more particular, to achieve a uniform pressure across the width of the transition region for a uniform mass flow into or out of the active area of a cell.

The common stack design is constituted by the membrane-electrode assemblies of each cell to be stacked between bipolar plates wherein the latter providing electrical conductivity between the cells. In a common compact stack design, such transition regions are provided within outer sections of the bipolar plates extending beyond a dimension of the membrane-electrode assemblies. In this compact stack design, the supply and discharge of fluid in communication with the cells is accommodated in the form of internal channels or pathways of different flow designs integrated in the bipolar plates, formed e.g. by recesses in surfaces to be stacked.

In such common prior art design, a frame member supporting the membrane-electrode assembly and arranged to mount the latter between the bipolar plates is covered by a pair of the gas diffusion layers of the respective membrane-electrode assembly on both sides for cushioning said frame member against plate features. However, in this case, a problem became apparent that the gas diffusion layers which cover the bipolar plates, but have no functionality used within the transition regions with respect to fluid flow, would undesirably increase the full height or total thickness of a unit cell. Including the factor of number of stacked unit cells, the gas diffusion layers being spent for cushioning plate features, but being unrequired in terms of flow functionality, thus accumulate to a not utilized portion of the overall height of the fuel cell stack. This accumulation of unnecessary material in the overall height of the fuel cell stack is detrimental to the desired compactness of a corresponding fuel cell device as demanded for a power source in transportation applications.

### Summary of the Invention

It is an object of the invention to overcome the described problems and to provide a more compact design for a fuel cell stack of comparable economical manufacturability achieving the same amount of flow cross-sectional area or depth within the transition regions at less total unit cell thickness.

The object is solved by a frame device having the features of claim 1 and a corresponding electrochemical fuel cell device having the features of claim 6. Further features and details of the invention result from the dependent claims, the specification, and the drawings. Features and details described in connection with the claimed frame device according to the invention naturally also apply in connection with the claimed fuel cell device according to the invention, and vice versa, so that the individual aspects of the invention are or can always be mutually referred to in the disclosure.

The invention proposes a frame device for an electrochemical fuel cell stack having stacked cells. The frame device being provided in each cell for mounting a membrane-electrode assembly in the fuel cell stack. The frame device comprises an open inner support section overlapping with the membrane-electrode assembly in a peripheral section for supporting the membrane-electrode assembly. The frame device further comprises an outer mounting section extending outside the peripheral section for fixing and insulating the frame device in the fuel cell device. The frame device also comprises at least one diffusion section comprising diffusor elements for diffusion of a fluid in a pathway of the fuel cell stack, the diffusor elements projecting from at least one of opposite sides in a thickness direction of the frame device.

Moreover, the invention analogously proposes an electrochemical fuel cell device having a stack arrangement of stacked cells, comprising bipolar plates stacked between each of the cells for providing electrical conduction between the cells. A cross-section of the stack arrangement with respect to a length and width direction of the frame device is divided into an active region for accommodating an electrochemical reaction of the cells, and transition regions arranged adjacent to the active region for accommodating pathways for supplying and returning fluids reacting in the cells. Each cell includes a membrane-electrode assembly and a frame device for mounting the membrane-electrode assembly in the stack arrangement. The frame device comprises an open inner support section for supporting the membrane-electrode assembly, an outer mounting section for fixing and insulating the frame device between two facing bipolar plates, and at least one diffusion section for diffusion of a fluid. With respect to the cross-section of the stack arrangement of the fuel cell device, the open inner support section is overlapping with the membrane-electrode assembly in a peripheral section of the active region, and the outer mounting section is extending outside the peripheral section of the active region in the cross-section of the stack arrangement. Also, with respect to the cross-section of the stack arrangement, the at least one diffusion section being defined by extending across or into at least one of the transition regions, respectively, and comprising diffusor elements projecting from the frame device into a pathway enclosed between the frame device and at least one of the two facing bipolar plates.

Hence, for the first time, the invention provides a fuel cell stack design and a single component design, where flow promoting features in a pathway of fluids reacting in the cells are integrated with the frame device of the membrane-electrode assembly.

As a first advantage, the same height of transition regions, in particular the same amount of flow cross-sectional area or depth within the transition regions is achieved for a smaller unit cell thickness, since the gas diffusion layers are removed.

As a second advantage, the smaller unit cell thickness can be realized without the cost or effort of designing so-called out of plane features which are more expensive to manufacture.

As a third advantage, the bipolar plates within the above-described transition regions of the stack arrangement can be formed to comprise fewer narrow recessed shapes, and can be replaced by e.g. one open cavity or chamber in the transition region for avoiding sharp edges of the bipolar plates that constitute a sealing interface.

A fourth advantage is based on the engagement of the frame device in planar directions by means of the diffusor elements protruding into fluid pathways. As a result, the frame member is secured against a slipping or shift into unintended positions with respect to the cross-section of the stack arrangement, particularly with respect to a flow structure.

Furthermore, a fifth advantage is the integration of a supplemental functionality of directing fluid flow in the component design of the frame device. Since the frame device is less massive and rigid as the bipolar plates, the integration of the diffusor elements on the frame device causes the use of alternative and potentially advantageous manufacturing methods or materials for the diffusor elements than those dictated by the manufacturing limitations of the bipolar plates. With the latter, features that extend proud of landings in the active area are usually unacceptable for bipolar plate manufacturing, but may be feasible with a manufacturing of the frame device according to the invention and desirable for supporting the frame device in some unit cell designs.

According to a preferred embodiment, the at least one diffusion section of the frame device comprises the diffusor elements on both of opposite sides in a thickness direction of the frame device, and the diffusor elements projecting from the frame device in both directions of adjacently stacked cells. With respect to the stack structure of the fuel cell device, the diffusor elements are projecting into pathways enclosed between the opposite sides of the frame device and the two facing bipolar plates.

According to an aspect of the invention, the diffusor elements are formed as round pillars for a diffusive spreading of a fluid.

According to an alternative aspect of the invention, the diffusor elements are formed as walls for a diffusive channeling of a fluid.

In an advantageous embodiment the diffusor elements are formed on the frame device of another material than the outer mounting section of the frame device.

In a further advantageous embodiment the diffusor elements are formed of a softer material than the material of the bipolar plates.

In an advantageous embodiment with respect to the stack structure of the fuel cell device, a pathway accommodated within a respective transition region for supplying and returning fluids is formed as a cavity recessed in a respective bipolar plate, and a fluid flow through the cavities being diffused by the diffusor elements projecting therein.

According to an aspect of the invention, the stack arrangement comprises two transition regions diametrically arranged on opposite sides with respect to the active region; and the frame device comprises two diffusion sections including the diffusor elements correspondingly arranged within the two transition regions of the stack arrangement on one or both opposite sides in a thickness direction of the frame device.

According to a preferred embodiment, the diffusor elements abut on a surface of a respective facing bipolar plate.

According to an aspect of the invention, the frame device is fixed by clamping of the diffusor elements between the frame member and at least one of the two facing bipolar plates and/or engaging of the diffusor elements with at least one of the two facing bipolar plates.

Further objectives, advantages, features and applications of the present invention arise from the following description of the exemplary embodiments with reference to the drawings. In the drawing:
- Fig. 1A: shows a schematic representation of the frame device for supporting the membrane-electrode assembly and comprising the diffusor elements according to an embodiment of the present invention;
- Fig. 1B: shows a corresponding schematic representation of a bipolar plate in the cross-section of a stack arrangement of a fuel cell device according to an embodiment of the present invention;
- Fig. 2: shows a cross-section of a stacked cell in a stack arrangement of a fuel cell device according to an embodiment of the present invention; and
- Fig. 3: shows a corresponding cross-section of a stacked cell in a prior art design of a fuel cell stack arrangement.

### Detailed description of the Invention

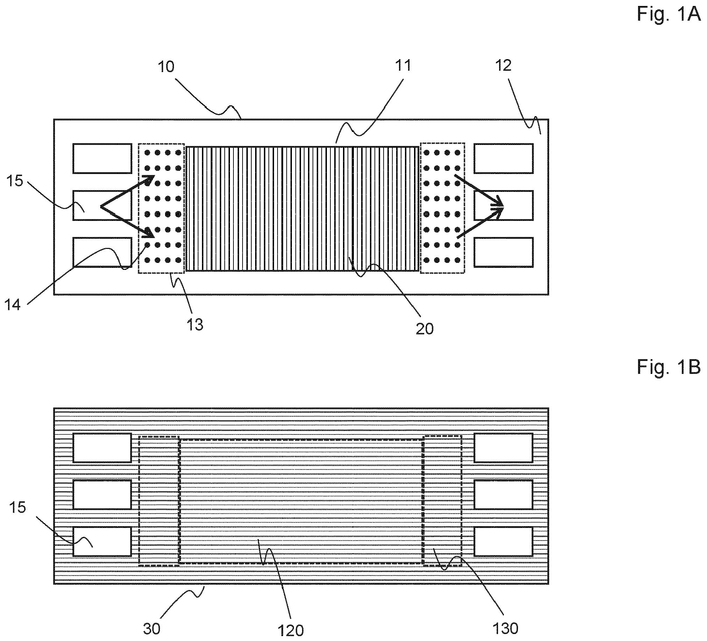

Fig. 1A and 1B show a frame device 10 and a bipolar plate 30 in the perspective of a cross-section of a stack arrangement in a fuel cell device 100.

In a plane view on the bipolar plate 30, Fig. 1B depicts certain regions marked by dashed lines defined for the whole stack arrangement in this cross section which is perpendicular to a stacking direction. In this plane view there is provided a centrally arranged active region 120 and two transition regions 130 diametrically arranged on opposite sides of the active region 120. The active region accommodates the cells, or more particularly is occupied by a membrane-electrode assembly (MEA) including all electrochemically active elements of the cells. The transition regions 130 accommodate fluid pathways to and from the cells 20,wherein the pathways having a flat shaped flow cross-section recessed into surfaces of the stacked bipolar plates 30.

Furthermore the transition regions 130 enclosing such internal pathways form a fluid communication between the cells and outer arranged channels 15 being part of an internal manifold or other structures for a supply of air and a hydrogen based fuel gas or for a discharge of exhaust gas and water. One or two of the channels 15 might also deliver and return a coolant for cooling the cell, however such channels is not in fluid communication with the cell 20 via internal pathways enclosed with in one of the transition regions 130.

As being apparent from a comparison of Fig. 1A and Fig. 1B, the frame device 10 and the bipolar plate 30 comprise basically the same outer contours shared with the cross-section of the stack arrangement and are mostly formed flat with planar interface surfaces to be stacked properly when facing each other. However, deviating from the illustrated design, alternative embodiments might provide a thin frame device 10 having a smaller outer contour than the thicker bipolar plates30, so as to enclose the cell and the frame device 10 by the bipolar plates 30 in a closed stack.

The frame device 10, as shown in Fig. 1A, serves for mechanical supporting, mounting and electrical insulation of the electrochemically active membrane-electrode assembly 20 between the bipolar plates 30, as well as a gas barrier in the transition region 130 in the stack arrangement. That means each cell of the fuel cell device 100 is equipped with the frame device 10. The frame device 10 or at least a section of the same are built from a suitably rigid material having a higher density or strength than the functional materials of the membrane-electrode assembly 20. The frame device 10 includes a support section 11 having a central opening being adequately smaller than the outer planar dimensions of the membrane-electrode assembly 20 so as to overlap with a peripheral section of the membrane-electrode assembly 20, or in other words so as to support the membrane-electrode assembly 20 in a peripheral section of the active region 120 of the stack arrangement. An area of the frame device 10 to be recognized in the illustration extending beyond the membrane-electrode assembly 20 or the active region 120 is defined as a mounting section 12 serving for fixing the frame device 10 with respect the stack arrangement and sealing the cell versus adjacently stacked elements.

Further, in correspondence with the transition regions 130 of the stack arrangement marked by dashed lines on the bipolar plate in Fig. 1B, the frame device 10 provides dedicated diffusion sections 13 congruently matching within the transition regions 130. In said diffusion sections 13 the frame device 10 has distinctive diffusor elements 14 for promoting, in a flat flow cross-section, a flow distribution of a fluid to be supplied or discharged through out a transverse dimension of the membrane-electrode assembly 20 while achieving a preferable even pressure distribution across said flat flow cross-section. In the illustrated embodiment of Fig. 1A, the diffusor elements 14 have a round pillar form arranged in equal distances. However, alternative embodiments might provide another suitable design of the diffusor elements 14 for effecting the desired flow dynamics including, for example, diffusor elements 14 in the form of channel walls for a splitting-up channel arrangement or the like.

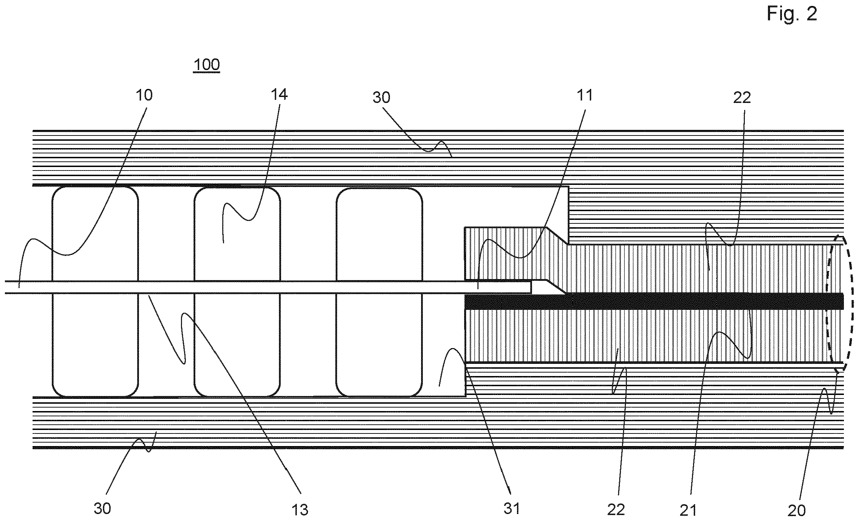

Fig. 2 shows a focussed part of a cross-section of one stacked cell in the stack arrangement of the fuel cell device 100. This cross-section is parallel to a stacking direction of the stack arrangement and reveals the sandwich structure of the membrane-electrode assembly 20. The membrane-electrode assembly 20 includes an ion-conductive membrane 21 or proton-exchange membrane (PEM) having a catalytic surface coating on each side embedded between two gas diffusion layers 22 for receiving and distributing or dissipating and leading away a gas or fluid in communication between a transition region 130 and the surface area of the membrane 21.

The illustrated cross-section of Fig. 2 also shows the surfaces and recesses of an embodiment of the bipolar plates 30, and a profile of the diffusion section 13 of the frame device 10, in particular the diffusor elements 14. The bipolar plates 30 provide a recessed cavity 31 within the transition regions 130 of the stack arrangement. The diffusor elements 14 of the frame device 10 fit into said cavity 31 and mutually form a flow dynamical effective internal structure influencing a fluid pathway when crossing the diffusion section 13 of the frame device 10 within the transition region 130 of the stack arrangement from a channel 15 to the membrane-electrode assembly 20 or vice versa.

In a preferred embodiment the diffusor elements 14 are made of different, particularly softer material than other sections, like the mounting section 12 or the support section 11 of the frame device 10. In a particularly preferred embodiment, the support section 11, the mounting section 12 and the diffusion section are integrally formed by a flat shaped body made of a rigid and electrical insulating material like a high density or strength synthetic resin-based material, while the diffusor elements 14 are made of an elastomer-based material as commonly used for sealing applications. In this way, tolerances leading to damages or leakages on abutting surfaces like the bottom of the cavity 31 of the bipolar plate 30 or parts of the frame device 10 itself can be avoided.

The diffusor elements 14 might be manufactured by molding techniques like injection molding or overmolding of the diffusor elements 14 by a softer material onto a frame body previously built of the more rigid material. Such molding techniques and materials enable a high detail resolution of profile features and enable an extension of features raised beyond a surface plane of the overall body thickness of a bipolar plate 30.

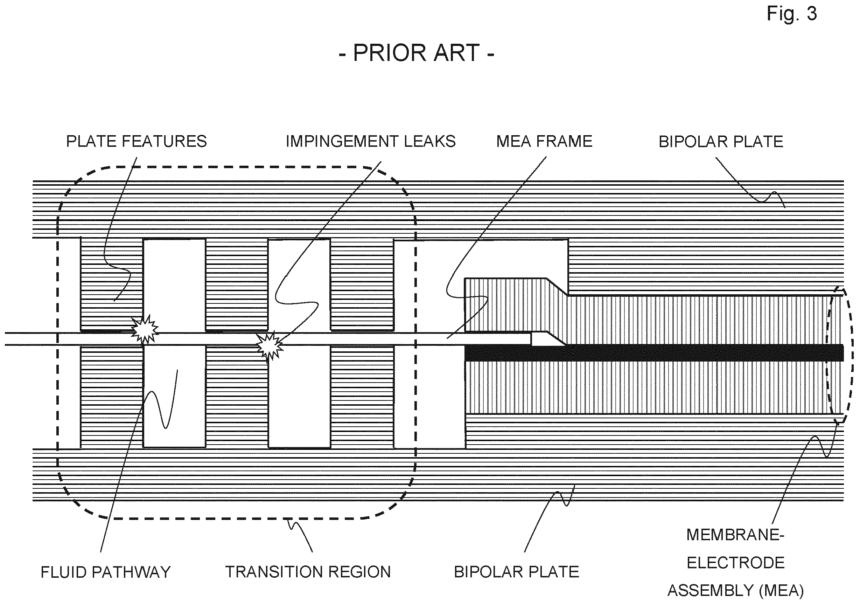

Fig. 3 shows a prior art design where profile features for diffusion of a fluid in the transition section are provided on the side of the bipolar plate 30. Due to a hardness of materials commonly used for the bipolar plates and such profiles, this structure is prone to problems like impingement leaks and excessive wear on interface surfaces, as mentioned in the introductory part of the present disclosure.

### List of reference characters

- 10: frame device
- 11: support section
- 12: mounting section
- 13: diffusion section
- 14: diffusor elements
- 15: fluid channels
- 20: membrane-electrode assembly
- 21: membrane
- 22: gas diffusion layer
- 30: bipolar plate
- 31: cavity
- 100: fuel cell device
- 120: active region
- 130: transition region

## Claims

1. A frame device (10) for an electrochemical fuel cell stack having stacked cells; wherein
the frame device (10) being provided in each cell for mounting a membrane-electrode assembly (20) in the fuel cell stack; wherein the frame device (10) comprises:
an open inner support section (11) overlapping with the membrane-electrode assembly (20) in a peripheral section for supporting the membrane-electrode assembly (20),
an outer mounting section (12) extending outside the peripheral section for fixing and insulating the frame device (10) in the fuel cell device (100), and
at least one diffusion section (13) comprising diffusor elements (14) for diffusion of a fluid in a pathway of the fuel cell stack, the diffusor elements (14) projecting from at least one of opposite sides in a thickness direction of the frame device (10).

2. The frame device (10) according to claim 1, wherein the at least one diffusion section (13) comprises the diffusor elements (14) projecting from both of opposite sides in a thickness direction of the frame device (10).

3. The frame device (10) according to claim 1 or 2, wherein the diffusor elements (14) are formed as round pillars for a diffusive spreading of a fluid.

4. The frame device (10) according to claim 1 or 2, wherein the diffusor elements (14) are formed as walls for a diffusive channeling of a fluid.

5. The frame device (10) according to any of claims 1 to 4, wherein the diffusor elements (14) are formed on the frame device (10) of another material, preferrable a softer material than the outer mounting section (12) of the frame device (10).

6. An electrochemical fuel cell device (100) having a stack arrangement of stacked cells, comprising bipolar plates (30) stacked between each of the cells for providing electrical conduction between the cells, wherein
a cross-section of the stack arrangement with respect to a length and width direction of the frame device is divided into an active region (120) for accommodating an electrochemical reaction of the cells, and transition regions (130) arranged adjacent to the active region (120) for accommodating pathways for supplying and returning fluids reacting in the cells; and
each cell includes a membrane-electrode assembly (20) and a frame device (10) for mounting the membrane-electrode assembly (20) in the stack arrangement; wherein
the frame device (10) comprises:
an open inner support section (11) for supporting the membrane-electrode assembly (20),
an outer mounting section (12) for fixing and insulating the frame device (10) between two facing bipolar plates (30), and
at least one diffusion section (13) for diffusion of a fluid; and
with respect to the cross-section of the stack arrangement of the fuel cell device (100),
the open inner support section (11) is overlapping with the membrane-electrode assembly (20) in a peripheral section of the active region (120),
the outer mounting section (12) is extending outside the peripheral section of the active region (120) in the cross-section of the stack arrangement, and
the at least one diffusion section (13) being defined by extending across or into at least one of the transition regions (130), respectively, and comprising diffusor elements (14) projecting from the frame device (10) into a pathway enclosed between the frame device (10) and at least one of the two facing bipolar plates (30).

7. The electrochemical fuel cell device (100) according to claim 6, wherein the at least one diffusion section (13) comprises the diffusor elements (14) on both of opposite sides in a thickness direction of the frame device (10), and the diffusor elements (14) projecting into pathways enclosed between the opposite sides of the frame device (10) and the two facing bipolar plates (30).

8. The electrochemical fuel cell device (100) according to claim 6 or 7, wherein a pathway accommodated within a respective transition region (130) for supplying and returning fluids is formed as a cavity recessed in a respective bipolar plate (30), and a fluid flow through the cavities being diffused by the diffusor elements (14) projecting therein.

9. The electrochemical fuel cell device (100) according to any of claims 6 to 8, wherein the stack arrangement comprises two transition regions (130) diametrically arranged on opposite sides with respect to the active region (120); and the frame device (10) comprises two diffusion sections (13) including the diffusor elements (14) correspondingly arranged within the two transition regions (130) of the stack arrangement on one or both opposite sides in a thickness direction of the frame device (10).

10. The electrochemical fuel cell device (100) according to any of claims 6 to 9, wherein the diffusor elements (14) abut on a surface of a respective facing bipolar plate (30).

11. The electrochemical fuel cell device (100) according to any of claims 6 to 10, wherein the diffusor elements (14) are formed on the frame device (10) of another material than the outer mounting section (12) of the frame device (10).

12. The electrochemical fuel cell device (100) according to any of claims 6 to 11, wherein the diffusor elements (14) are formed of a softer material than the material of the bipolar plates (30).

13. The electrochemical fuel cell device (100) according to any of claims 6 to 12, wherein the diffusor elements (14) are formed as round pillars for diffusive spreading of a fluid, or wherein the diffusor elements (14) are formed as walls for diffusive channeling of a fluid.

14. The electrochemical fuel cell device (100) according to any of claims 6 to 12, wherein the diffusor elements (14) are formed as walls for diffusive channeling of a fluid.

15. The electrochemical fuel cell device (100) according to any of claims 6 to 13, wherein the frame device (10) is fixed by clamping of the diffusor elements (14) between the frame member and at least one of the two facing bipolar plates (30) and/or engaging of the diffusor elements (14) with at least one of the two facing bipolar plates (30).
